# EUROPEAN PATENT SPECIFICATION

(11) **EP 2 564 915 B1**
(45) Date of publication and mention of the grant of the patent: **12.10.2016**
(21) Application number: 11179402.0
(22) Date of filing: 30.08.2011
(51) Int. Cl.: B01D 53/14, B01D 53/62, F23J 15/04, B01D 53/18

(54) **Absorber for capturing CO2 in ammoniated solution**
Absorber zum Abtrennen von CO2 in einer Ammoniaklösung
Absorbeur pour capturer le CO2 dans une solution ammoniacée

(43) Date of publication of application: 06.03.2013
(73) Proprietor: General Electric Technology GmbH, 5400 Baden (CH)
(72) Inventor: Guidolin, Sandra, 74500 Evian (FR); Koss, Ulrich, 8702 Zollikon (CH); Kniesburges, Peter, 65197 Wiesbaden (DE)
(74) Representative: General Electric Technology GmbH

(56) References cited:
- WO-A1-2009/055419
- US-A1- 2011 061 533

## Description

### Field of the Invention

The present invention relates to a method of capturing CO₂ from a flue gas stream in a CO₂-absorber.

The present invention further relates to system for capturing CO₂ from a flue gas stream.

### Background of the Invention

In the combustion of a fuel, such as coal, oil, peat, waste, natural gas, etc., in a combustion plant, such as a power plant, a hot process gas is generated, such process gas containing, among other components, carbon dioxide, CO₂. The negative environmental effects of releasing carbon dioxide to the atmosphere have been widely recognized, and have resulted in the development of processes adapted for capturing carbon dioxide from the hot process gas generated in the combustion of the above mentioned fuels. One such system and process has previously been disclosed and is directed to a Chilled Ammonia based system and method for capture of CO₂ from a post-combustion flue gas stream using an ammoniated solution and/or slurry for capturing CO₂ from a flue gas stream. WO 2009/055419 discloses a process and system using three absorbers to improve efficiency of the CO₂ capture process. The system disclosed in WO 2009/055419 is, however, complicated from a technical point of view, and has a high operating cost.

US 2011/061533 discloses an absorber for capturing CO2 in an ammoniated solution. The absorber vessel has three stages: a lower stage (104), an intermediate stage (105) and a top stage (106). The stages are provided with liquid collection receptacles (110, 111, 112) for collecting liquid and separating it from the gas. The lower stage (104) is supplied with a recirculated (CO2 rich) absorption solution, which may also comprise lean solution. The lean solution is supplied to a second tank (108) and is optionally pumped to a first tank (107) from which the mixture of recirculated and lean ammoniated solution is pumped to the lower stage (104). The intermediate stage (105) is supplied with a mixture of recirculated solution and lean solution pumped from the second tank (108).

### Summary of the Invention

The above drawbacks and deficiencies of the prior art are overcome or alleviated by means of a method of capturing CO₂ from a flue gas stream in a CO₂-absorber according to the features of claim 1.

An advantage of this method is that carbon dioxide can be efficiently captured, without an undue slip of ammonia, with lower operating cost and capital costs compared to the prior art.

The method comprises forwarding the recirculated CO₂-enriched ammoniated solution first through the second absorption stage, and then through the first absorption stage. An advantage is that the recirculated CO₂-enriched ammoniated solution acts as a barrier to gaseous ammonia and serves to collect not only carbon dioxide, but also ammonia from the flue gas, before the flue gas is forwarded from the second stage to a water wash vessel or an ammonia polishing stage, as the case may be.

According to one embodiment the method further comprises forwarding the CO₂-lean ammoniated solution through the first absorption stage without forwarding the CO₂-lean ammoniated solution through the second absorption stage. An advantage of this embodiment is an improved mass transfer of CO₂ from the gas phase to the liquid phase by achieving a concentration profile with regard to CO₂ in the ammoniated solution which varies in an optimum manner along the CO₂-absorber.

According to one embodiment the recirculated CO₂-enriched ammoniated solution and the CO₂-lean ammoniated solution are kept at a temperature, while passing through the first and second absorption stages, which is above a temperature at which ammonium bicarbonate particles may start to precipitate from the respective ammoniated solution. An advantage of this embodiment is that the absorber operates entirely in solution mode, with no, or almost no, formation of solid carbonate particles. This reduces risks of clogging in the absorber and makes absorber operation more robust. It is also possible to reduce the liquid to gas ratio, L/G, in the absorber since operating with solid formation in accordance with the prior art requires high liquid to gas ratios to reduce risks of solids accumulating in unwanted locations inside the absorber.

The partly cleaned flue gas stream is passed vertically upwards from the first absorption stage to the second absorption stage, and wherein the recirculated CO₂-enriched ammoniated solution is passed vertically downwards from the second absorption stage to the first absorption stage. An advantage is that gas distribution of the partly cleaned flue gas stream entering vertically upwards into the second absorption stage becomes very even and efficient, and so does the liquid distribution of the recirculated CO₂-enriched ammoniated solution entering vertically downwards into the first absorption stage.

The method further comprises contacting, in a third absorption stage, being an ammonia polishing stage, of the CO₂-absorber, the cleaned flue gas stream coming from the second absorption stage with a polishing portion of the recirculated CO₂-enriched ammoniated solution to form a further cleaned flue gas stream, the polishing portion of the recirculated CO₂-enriched ammoniated solution being cooled, prior to being supplied to the third stage, to a polishing temperature which is lower than an absorbing temperature of the absorbing portion of the recirculated CO₂-enriched ammoniated solution supplied to the second stage. An advantage is that a very low equilibrium pressure of ammonia, beneficial for low slip of ammonia, is achieved in the third absorption stage. Still further, only a small amount of the recirculated CO₂-enriched ammoniated solution needs to be cooled to the low temperature for ammonia capture in the third absorption stage, which reduces the need for installed cooling power, and in particular the need for installed refrigeration unit capacity.

The method further comprises mixing the polishing portion of the recirculated CO₂-enriched ammoniated solution, after having passed through the third absorption stage, with the absorbing portion of the recirculated CO₂-enriched ammoniated solution to form the recirculated CO₂-enriched ammoniated solution passing through the second absorption stage. An advantage is that the polishing portion of the recirculated CO₂-enriched ammoniated solution is utilized in an efficient manner for absorbing ammonia in both the third and second absorption stages in a counter-current mode in relation to the flue gas flow.

According to one embodiment the R-value, being the molar concentration of NH₃ divided by the molar concentration of CO₂, of the recirculated CO₂-enriched ammoniated solution supplied to the second absorption stage is within the range of 1.75 to 2.00. An advantage of this embodiment is that efficient capture of carbon dioxide is achieved, still at a low slip of ammonia, and with little, or no, formation of solid ammonium bicarbonate. More preferably, the R-value of the recirculated CO₂-enriched ammoniated solution supplied to the second absorption stage may be within the range of 1.81 to 1.96.

The temperature of the recirculated CO₂-enriched ammoniated solution supplied to the second absorption stage is controlled to be within the range 20-25°C. An advantage of this temperature range is that efficient capture of carbon dioxide, low slip of ammonia, and little, or no, formation of solid ammonium bicarbonate is achieved.

According to one embodiment, the R-value of the ammoniated solution is within the range of 1.70 to 2.80 throughout the entire first absorption stage. An advantage of this embodiment is that very efficient capture of carbon dioxide is achieved, still with no, or only little, formation of solid ammonium bicarbonate.

According to one embodiment, the R-value of the recirculated CO₂-enriched ammoniated solution entering to the second absorption stage is lower than the R-value of the mixture of recirculated CO₂-enriched ammoniated solution and the CO₂-lean ammoniated solution entering the first absorption stage. An advantage of this embodiment is that efficient capture of carbon dioxide is achieved in the first absorption stage, and a very low slip of ammonia is achieved from the second absorption stage.

The temperature of the mixture of recirculated CO₂-enriched ammoniated solution and CO₂-lean ammoniated solution entering the first absorption stage is higher than the temperature of the recirculated CO₂-enriched ammoniated solution entering the second absorption stage. An advantage is that kinetics beneficial for efficient absorption of CO₂ are improved in the mass transfer device of the first stage, which significantly reduces the need for height of the mass transfer device packing of the first absorption stage.

According to one embodiment, the liquid to gas ratio, L/G, on a mass basis is 5 to 16, more preferably 7 to 12, and most preferably 8 to 10 kg solution / kg flue gas in the first absorption stage. The L/G is 3 to 10, and more preferably 4 to 8, kg solution / kg flue gas in the second absorption stage. Such liquid to gas ratios have been found to result in efficient capture of carbon dioxide, with low energy consumption. Additionally, the relatively low L/G increases the temperature inside the absorber, in particular in the first absorption stage, since the exothermic absorption of CO₂ has to heat a smaller amount of solution. An increased temperature in the absorber is beneficial for the kinetics of the capture of CO₂. Furthermore, the relatively low L/G reduces back-mixing, i.e., occasional entrainment upwards of solution, which further increases the CO₂ capture due to a more stable counter-current flow between solution and gas.

According to one embodiment the first portion of the collected CO₂-enriched ammoniated solution comprises 30 to 70 % by weight of the collected CO₂-enriched ammoniated solution, and wherein the second portion of the collected CO₂-enriched ammoniated solution comprises 70 to 30 % by weight of the collected CO₂-enriched ammoniated solution. An advantage of this embodiment is that efficient balance between recirculation and regeneration of the collected CO₂-enriched ammoniated solution is achieved, resulting in efficient operation of the first and second absorption stages, and low total liquid to gas ratio.

According to one embodiment 4-30% of the total flow of the CO₂-lean ammoniated solution forwarded to the CO₂-absorber is forwarded to the second absorption stage for contacting the partly cleaned flue gas stream. An advantage of this embodiment is that an enhanced removal of CO₂ in the second absorption stage may be achieved.

The above mentioned drawbacks and deficiencies of the prior art are also overcome or alleviated by means of a system for capturing CO₂ from a flue gas stream according to the features of claim 12.

An advantage of this system is that it is robust and has lower operating and capital costs compared to the prior art systems.

According to one embodiment, the absorber comprises a single tower housing the first and the second contacting means, with the second contacting means being located vertically above the first contacting means inside the tower. An advantage of this embodiment using a single tower which is common to the first and second contacting means is that a simple absorber design can be utilized. Furthermore, the transfer of partly cleaned flue gas and recirculated CO₂-enriched ammoniated solution between the first and second absorption stages can be made efficient, in a "plug flow" manner and in a way which ensures good distribution of flue gas and solution within packing material of the respective stage. A third contacting means of the third absorption stage is arranged within the single tower housing together with the first and the second contacting means. The third contacting means is located vertically above the second contacting means.

Further objects and features of the present invention will be apparent from the following detailed description and claims.

### Brief description of the Drawings

The invention is described in more detail below with reference to the appended drawings in which:
Fig. 1 is a schematic side view of a boiler system.
Fig. 2 is a schematic side view of a CO₂-absorber.
Fig. 3 is a diagram illustrating the composition of ammoniated solution in various positions of the CO₂-absorber of Fig. 2.
Fig. 4 is a diagram illustrating the temperature of ammoniated solution in various positions of the CO₂-absorber of Fig. 2.
Fig. 5 is a diagram illustrating the molar fractions of carbon dioxide and ammonia of the flue gas stream in various positions of the CO₂-absorber of Fig. 2.

### Description of preferred Embodiments

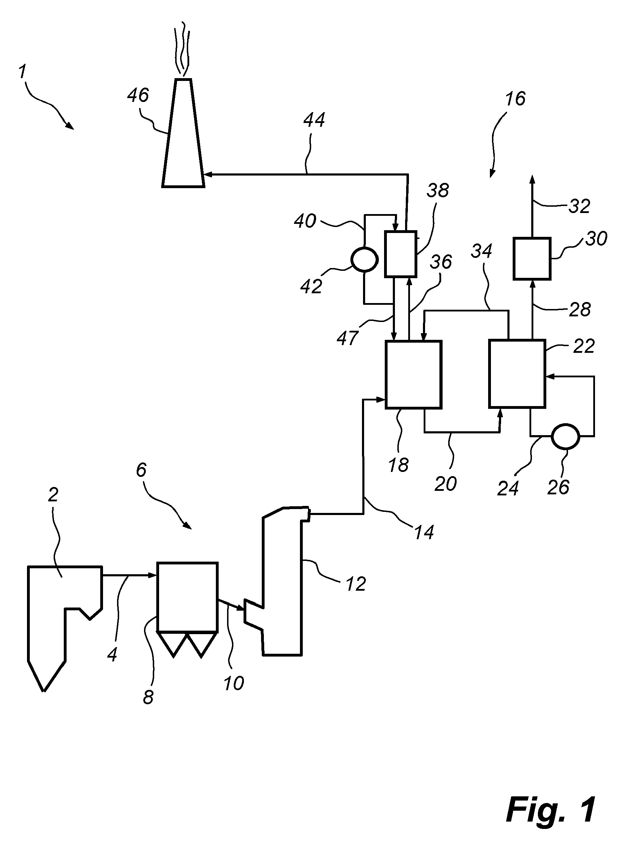

Fig. 1 is a schematic representation of a boiler system 1, as seen from the side thereof. The boiler system 1 comprises a boiler 2. During the combustion of a fuel, such as coal or oil, a hot process gas, often referred to as a flue gas stream, is generated in the boiler 2. The flue gas stream, which contains polluting substances, including for example dust particles, sulphur dioxide, SO₂, sulphur trioxide, SO₃, nitrogen oxides, NOₓ, and carbon dioxide, CO₂, leaves the boiler 2 via a gas duct 4. The gas duct 4 is operative for forwarding the flue gas stream to a conventional air pollution control system 6. The conventional air pollution control system 6 may include a dust collector 8, in the form of, e.g., an electrostatic precipitator, an example of which is described in US 4,502,872. Furthermore, the conventional air pollution control system 6 comprises a duct 10 which is operative for forwarding the flue gas stream from the dust collector 8 to a sulphur dioxide capture device 12, sometimes referred to as a Flue Gas Desulfurization system (FGD), in the form of, for example, a wet scrubber. An example of a wet scrubber can be found in EP 0 162 536 A1. The sulphur dioxide capture device 12 could also be a so-called dry system, an example of which is illustrated in WO 2004/026443 A1, in which the flue gas stream is contacted with a moistened absorbent material.

The conventional air pollution control system 6 could comprise further devices, such as a selective catalytic reduction reactor, e.g., of the type described in US 5,555,849, for capturing nitrogen oxides from the flue gas stream, such further devices not being illustrated in Fig. 1 for reasons of clarity of illustration.

The flue gas stream, which comprises very small amounts of most pollutants, but still most of the original concentration of carbon dioxide, oxygen and nitrogen, leaves the conventional air pollution control system 6 via a duct 14. The duct 14 is operative for forwarding the flue gas stream to a carbon dioxide capture system 16. The carbon dioxide capture system 16 comprises a CO₂-absorber 18 in which the flue gas stream is brought into contact with an ammoniated solution. The ammoniated solution may also include a promoter to enhance the chemical reaction kinetics involved in the capture of CO₂ by the ammoniated solution. For example, the promoter may include an amine (e.g. piperazine) or an enzyme (e.g., carbonic anhydrase or its analogs), which may be in the form of a solution or immobilized on a solid or semi-solid surface.

A CO₂-enriched solution pipe 20 is operative for forwarding, by means of a high pressure pump, not illustrated in Fig. 1 for reasons of clarity, a CO₂-enriched ammoniated solution from the CO₂-absorber 18 to a regenerator 22. Heat is provided to the regenerator 22 by a heating circuit 24 comprising a heater 26. The high pressure and high temperature in the regenerator 22 causes the release of high-pressure gaseous CO₂, which is forwarded, via a duct 28, to an optional CO₂ compression unit 30 in which the CO₂ is further compressed, and optionally further cleaned, to obtain a stream of cleaned compressed CO₂ that may be sent for CO₂ sequestration via duct 32. A CO₂-lean ammoniated solution pipe 34 is operative for returning CO₂-lean ammoniated solution from the regenerator 22 to the CO₂-absorber 18.

A duct 36 is operative for forwarding a cleaned flue gas stream, having a low concentration of carbon dioxide, from the CO₂-absorber 18 to a water wash vessel 38, which is optional and which is operative for capturing ammonia, NH₃, from the flue gas stream that has been treated in the CO₂ absorber 18. A stream of cold water containing low concentration of ammoniated solution is supplied via pipe 40, is cooled in a heat exchanger 42 and is supplied to the water wash vessel 38. A duct 44 is operative for forwarding a flue gas stream that has been further cleaned in the water wash vessel 38, to a stack 46 which releases the further cleaned flue gas stream to the atmosphere. Optionally, a portion of the cold water circulating in water wash vessel 38 and having captured ammonia may be transported, via pipe 47, to the CO₂-absorber 18.

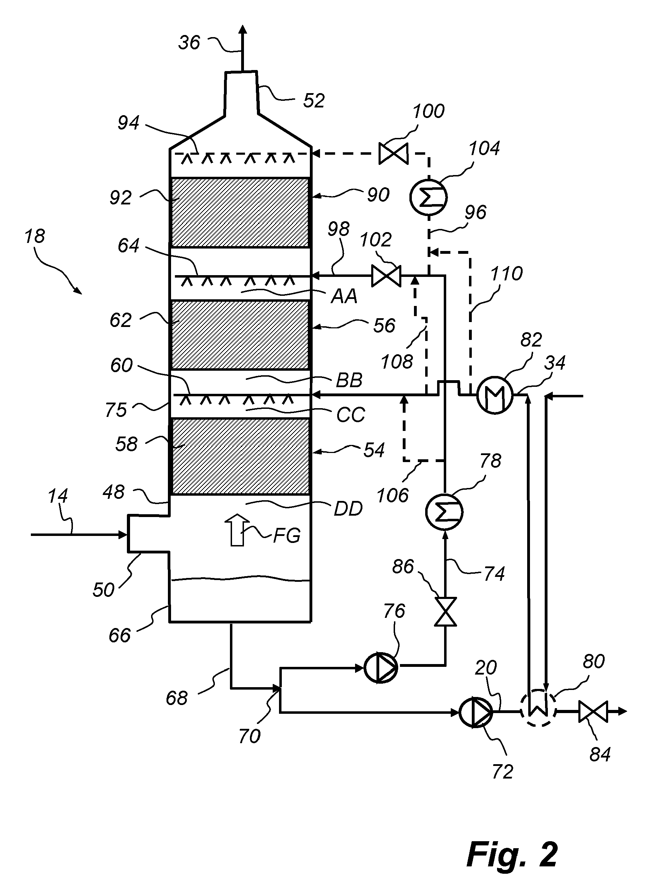

Fig. 2 is a schematic side view of the CO₂-absorber 18. The absorber 18 comprises a single vessel having the shape of a single tower 48. The tower 48 is provided with an inlet 50 located near the bottom of tower 48 and arranged for receiving the flue gas stream entering via duct 14. Flue gas stream FG may pass vertically upwards through tower 48 and leave tower 48 via an outlet 52 located near the top of tower 48. Flue gas stream FG leaving tower 48 via outlet 52 is forwarded further, via duct 36, to optional water wash vessel 38 and stack 46, as illustrated in Fig. 1.

As is illustrated in Fig. 2, the absorber 18 comprises a first, lower, absorption stage 54, and a second, upper, absorption stage 56. The first absorption stage 54 comprises a first contacting means comprising a mass transfer device 58, which may, for example, comprise a random or structured packing. An example of a structured packing material is Mellapak™ available from Sulzer Chemtech AG, Winterthur, CH. An example of a random packing material is Pall™ rings available from Raschig GmbH, Ludwigshafen, DE. The first contacting means of the first absorption stage 54 further comprises a liquid distributor 60 which is arranged for distributing an ammoniated solution over the mass transfer device 58. The liquid distributor 60 may comprise nozzles or openings through which the ammoniated solution may be distributed over the mass transfer device 58. The second absorption stage 56 comprises a second contacting means comprising a mass transfer device 62, which may be of a similar or different type as mass transfer device 58, and a liquid distributor 64 which may be of a similar or different type as liquid distributor 60. Liquid distributor 64 is adapted for distributing solution over the mass transfer device 62.

A collecting device in the form of a tank 66 is arranged at the bottom of the tower 48 for collecting CO₂-enriched ammoniated solution to form a collected CO₂-enriched ammoniated solution. A pipe 68 is connected to the tank 66 for transporting a stream of CO₂-enriched solution from the tank 66 to a splitting point 70. At the splitting point 70 the flow of collected CO₂-enriched solution is split into a first portion being a first CO₂-enriched solution stream which is forwarded, via CO₂-enriched solution pipe 20 and a high-pressure pump 72, to the regenerator 22 illustrated in Fig. 1 for being regenerated in accordance with the previous description, and a second portion being a second CO₂-enriched solution stream, forming a recirculated CO₂-enriched ammoniated solution, forwarded via a recirculation pipe 74 to the liquid distributor 64 of the second stage 56.

A central portion 75 of the tower 48 forms a transfer device which allows the direct transfer of partly cleaned flue gas stream FG coming from the first absorption stage 54 to the second absorption stage 56, and allows transfer of recirculated CO₂-enriched solution from the second absorption stage 56 to the first absorption stage 54. The recirculated CO₂-enriched solution flows vertically downwards, by gravity, from the second absorption stage 56 to the first absorption stage 54. A pump is not needed for transferring the recirculated CO₂-enriched solution from second stage 56 to first stage 54. Furthermore, it is not necessary to cool or heat the recirculated CO₂-enriched solution when passing vertically downward from second stage 56 to first stage 54.

A recirculation pump 76 is arranged on the recirculation pipe 74 for transporting the second stream from the splitting point 70 to the second stage 56. A water cooler 78 is arranged on the recirculation pipe 74 for cooling the recirculated CO₂-enriched solution before allowing the recirculated CO₂-enriched solution to enter the liquid distributor 64 of the second stage 56.

As alternative to being connected to the splitting point 70, the pipe 20 and the recirculation pipe 74 could be fluidly connected directly to the tank 66.

Typically, the second stream of collected CO₂-enriched solution forwarded, as a recirculated CO₂-enriched solution, via recirculation pipe 74 to the second stage 56 would comprise 30-70 % by weight of the total amount of collected CO₂-enriched solution being transported from tank 66. The first stream of collected CO₂-enriched solution forwarded via pipe 20 to the regenerator 22 illustrated in Fig. 1 comprises the remaining 70-30 % by weight of the total amount of collected CO₂-enriched solution being transported from tank 66.

CO₂-lean solution is supplied from the regenerator 22 illustrated in Fig. 1 to the liquid distributor 60 of the first, lower, absorption stage 54 of the absorber 18 via the CO₂-lean solution pipe 34.

Optionally, the CO₂-lean solution supplied via pipe 34 could be heat-exchanged in a heat exchanger 80 with the CO₂-enriched solution of pipe 20 before entering liquid distributor 60. Furthermore, a further heat exchanger 82 could be arranged in the pipe 34 for further cooling the CO₂-lean solution before the latter enters the liquid distributor 60. The cooling medium of the heat exchanger 82 is preferably water, for example from a cooling tower, since the cooling requirement for the CO₂-lean solution is moderate.

Both in the first absorption stage 54 and in the second absorption stage 56, the contact between the flue gas stream and the respective solution occurs in a counter-current mode, with the flue gas stream FG flowing vertically upwards, and the respective solution flowing vertically downwards.

The amount of the first portion of the collected CO₂-enriched ammoniated solution, forwarded to the regenerator 22 via pipe 20, in relation to the amount of the second portion of the collected CO₂-enriched ammoniated solution, forwarded to the second absorption stage 56 via pipe 74 can be controlled. To this end, a first control valve 84 may be arranged in the pipe 20, and a second control valve 86 may be arranged in the pipe 74.

The absorber 18 is provided with a third, uppermost, absorption stage 90. The third stage 90 is an ammonia polishing stage having the purpose of further reducing the load of ammonia on the water wash vessel 38 illustrated in Fig. 1. The third absorption stage 90 comprises a third contacting means comprising a mass transfer device 92, which is of a similar or different type as mass transfer device 58, and a liquid distributor 94 which is of a similar or different type as liquid distributor 60. Liquid distributor 94 is adapted for distributing solution over the mass transfer device 92.

A "polishing portion" of the recirculated CO₂-enriched ammoniated solution supplied from pump 76 via recirculation pipe 74 is branched off to a polishing stage recirculation pipe 96. The remainder of the recirculated CO₂-enriched ammoniated solution, which remainder may be referred to as a "CO₂ absorbing portion" of the recirculated CO₂-enriched ammoniated solution, is transported via a further recirculation pipe 98, to the second stage 56 for being used in the absorption of CO₂ and ammonia in the second absorption stage 56 in accordance with the principles described hereinbefore. To control the amount of the recirculated CO₂-enriched ammoniated solution being transported to the respective second and third stages 56, 90, a valve 100 has been arranged on the polishing stage recirculation pipe 96, and a valve 102 has been arranged on the further recirculation pipe 98. By controlling the valves 100, 102 a suitable amount of recirculated CO₂-enriched ammoniated solution can be supplied to each of the stages 56, 90. Typically, 50-90 %, more preferably 70-80 %, of the total amount of recirculated CO₂-enriched ammoniated solution pumped by pump 76 is transported, as the CO₂ absorbing portion, to the second stage 56 via pipe 98, and the remaining 10-50 %, more preferably 20-30 %, of the recirculated CO₂-enriched ammoniated solution is transported, as polishing portion, to the third stage 90 via pipe 96.

To improve the polishing capacity of the optional third stage 90 a refrigerated cooler 104 is be arranged in the polishing stage recirculation pipe 96. The refrigerated cooler 104 may be connected to a refrigeration unit, not shown, which supplies a low temperature cooling medium, such as a water-glycol mixture, an organic cooling media, or ammonia, having a temperature of typically 0-8°C, to the refrigerated cooler 104. The refrigerated cooler 104 is arranged for cooling the polishing portion of the recirculated CO₂-enriched ammoniated solution transported in the polishing stage recirculation pipe 96 to a polishing temperature of about 0-10°C, preferably 3-7°C. The polishing temperature of about 0-10°C, i.e., the temperature of the polishing portion of the recirculated CO₂-enriched ammoniated solution supplied to the third stage 90, is lower than the absorbing temperature of typically 20-25°C of the CO₂ absorbing portion of the recirculated CO₂-enriched ammoniated solution supplied to the second stage 56. The low polishing temperature of the polishing portion of the recirculated CO₂-enriched ammoniated solution supplied to the third stage 90 is very efficient for polishing the cleaned flue gas coming from the second stage 56 with respect to its concentration of ammonia. Hence a further cleaned flue gas with a very low concentration of ammonia leaves the absorber 18 via the outlet 52 and is forwarded, via duct 36, to optional water wash vessel 38.

According to an alternative embodiment a portion of the recirculated CO₂-enriched ammoniated solution pumped in pipe 74 by pump 76 is directed, via a first by-pass pipe 106, to the CO₂-lean ammoniated solution pipe 34 and further to the first absorption stage 54. An advantage of forwarding a portion of the recirculated CO₂-enriched ammoniated solution to the first stage 54 is that, in some cases, it is desired to reduce a concentration of gaseous ammonia of the partially cleaned flue gas leaving the first stage 54. Typically, 0-50 % of the total flow of recirculated CO₂-enriched ammoniated solution pumped by pump 76 would be directed to the first stage 54 for the purpose of reducing the concentration of ammonia of the partially cleaned flue gas, and the remaining 50-100 % would be pumped to the second stage 56, and third stage 90, if present.

According to a further alternative embodiment a portion of the CO₂-lean ammoniated solution forwarded from the regenerator 22 via the pipe 34 may be forwarded, via a second by-pass pipe 108, to the recirculation pipe 74, 98 and further to the second absorption stage 56. An advantage of forwarding a portion of the CO₂-lean ammoniated solution to the second stage 56 is that in some cases it is desired to increase the CO₂ absorption capacity of the second absorption stage 56. Typically 4-30%, and more preferably 10-20 %, of the total flow of CO₂-lean ammoniated solution of the pipe 34 would, in this alternative embodiment, be directed to the second stage 56 for the purpose of increasing the absorption of CO₂ in the second absorption stage 56, and the remaining amount of CO₂-lean ammoniated solution would be forwarded, via the pipe 34, to the first stage 54.

According to a still further alternative embodiment a portion of the CO₂-lean ammoniated solution forwarded from the regenerator 22 via the pipe 34 may be forwarded, via a third by-pass pipe 110, to the polishing stage recirculation pipe 96, optionally via the refrigerated cooler 104, and further to the third absorption stage 90. An advantage of forwarding a portion of the CO₂-lean ammoniated solution to the third stage 90 is that in some cases it is desired to reduce the risk of solid precipitation of ammonium bicarbonate and/or carbonate particles of the third stage 90. Typically, 0-5 % of the total flow of CO₂-lean ammoniated solution of the pipe 34 would be forwarded to the third stage 90 for the purpose of reducing the risk of solid precipitation in the third stage 90, and the remaining amount of CO₂-lean ammoniated solution would be forwarded to the first stage 54. According to one embodiment a portion, typically 2-10% of the total flow of CO₂-lean ammoniated solution transported to the absorber 18 from the regenerator 22 via the pipe 34, would be transported, via third by-pass pipe 110, to the third stage 90 in an intermittent manner. For example, the CO₂-lean ammoniated solution could be supplied to third stage 90, via third by-pass pipe 110, on regular intervals, for example during a period of 1-10 minutes every second hour, or when a formation of solid precipitation of ammonium bicarbonate particles in the third stage 90 has been detected, in order to dissolve formed ammonium bicarbonate particles.

The function of the absorber 18 will now be described in more detail with reference to Fig. 2, and a number of diagrams illustrating the operation. The diagrams relate to a computer simulation using Aspen™ simulation tool of the performance of an absorber 18 having the first absorption stage 54, the second absorption stage 56, but not any third absorption stage 90. In the computer simulation 100% of the recirculated CO₂-enriched ammoniated solution pumped by pump 76 is transported to the second stage 56 and 100% of the CO₂-lean ammoniated solution is transported to the first stage 54.

In Fig. 2 four locations AA, BB, CC and DD inside of the tower 48 of the absorber 18 have been illustrated.
Location AA refers to a location where the CO₂-enriched solution forwarded via recirculation pipe 74 enters the absorber 18 and where the flue gas stream FG from which CO₂ has been captured leaves the absorber 18. Hence, location AA refers to conditions of "fresh recirculated CO₂-enriched solution" entering second stage 56 of absorber 18, and "cleaned flue gas stream" leaving second stage 56 of absorber 18.

Location BB refers to a location where the recirculated CO₂-enriched solution supplied via pipe 74 has passed through mass transfer device 62 of second stage 56 of absorber 18, and where partly cleaned flue gas stream FG is about to enter second stage 56. Hence, location BB refers to conditions of "partly spent recirculated CO₂-enriched solution" leaving second stage 56 of absorber 18, and "partly cleaned flue gas stream" about to enter second stage 56 of absorber 18.

Location CC refers to a location where the recirculated CO₂-enriched solution having passed through mass transfer device 62 of second stage 56 of absorber 18 has been mixed with fresh CO₂-lean solution entering via pipe 34, just prior to entering first stage 54 of absorber 18. The properties of the partly cleaned flue gas stream FG is substantially the same in location CC as in location BB. Hence, location CC refers to conditions of "mixture of partly spent recirculated CO₂-enriched solution and fresh CO₂-lean solution" about to enter first stage 54 of absorber 18, and "partly cleaned flue gas stream" leaving first stage 54 of absorber 18.

Location DD refers to a location where the mixture of the recirculated CO₂-enriched solution and the CO₂-lean solution has passed through mass transfer device 58 of first stage 54 of absorber 18, and where CO₂-rich flue gas stream FG is about to enter first stage 54. Hence, location DD refers to conditions of "mixture of spent CO₂-enriched solution and spent CO₂-lean solution" leaving first stage 54 of absorber 18, and "CO₂-rich flue gas stream" about to enter first stage 54 of absorber 18. The conditions of the mixture of the spent CO₂-enriched solution and spent CO₂-lean solution in location DD is substantially the same as the conditions of the solution collected in tank 66, and forwarded via pipes 68, 20 and 74.

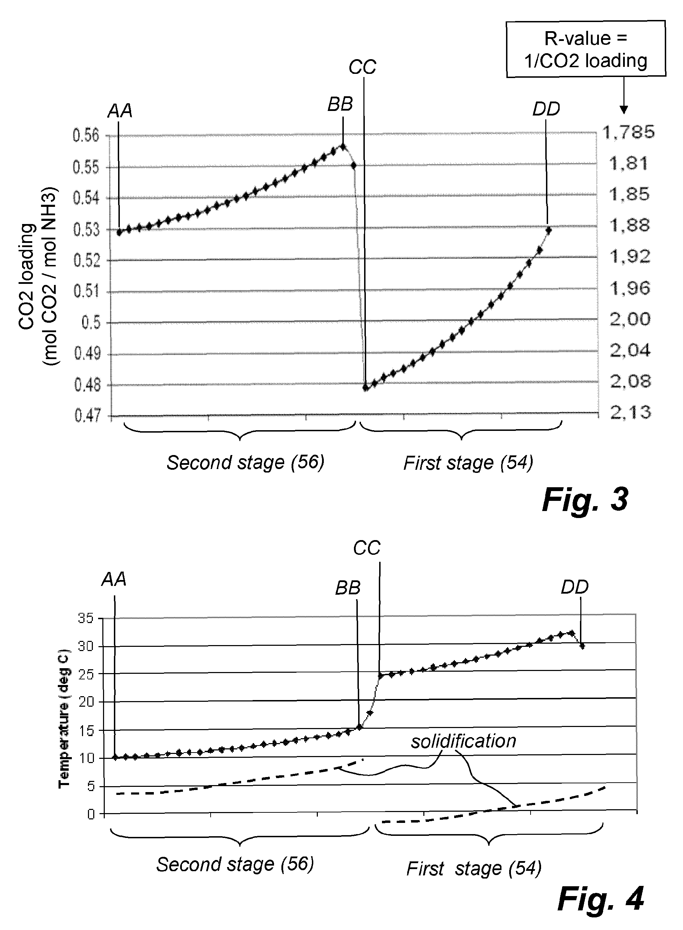

Fig. 3 illustrates the relation between the carbon dioxide, CO₂, and the ammonia, NH₃, in the ammoniated solution in various positions of the absorber 18 illustrated in Fig. 2, as obtained from a computer simulation of the performance of the absorber 18. In the simulation 50 % by weight of the amount of solution collected in tank 66 was recirculated to second stage 56 via pipe 74, and 50% by weight of the amount of solution collected in tank 66 was forwarded to regenerator 22 for being regenerated. The amount of CO₂-lean solution entering the absorber 18 via pipe 34 was equal to the amount of CO₂-enriched solution leaving the absorber 18 via pipe 20, except for the fact that a portion of the CO₂ content of the CO₂-enriched solution was released in the regenerator 22. Furthermore, ammonia slipping out of the absorber 18 was compensated for by adding a similar amount to the CO₂-enriched solution, such that the concentration of ammonia was constant over time.

The relation between concentration of CO₂ and NH₃ in the solutions at the various locations can be given in various manners. In Fig. 3 the relation is given both as "CO₂ loading" (molar concentration of CO₂ divided by molar concentration of NH₃), and as "R-value" (molar concentration of NH₃ divided by molar concentration of CO₂). It will be appreciated that "R-value" is equal to 1/"CO₂ loading".

It has been found that the following conditions apply; a high R-value is beneficial for the capture of CO₂ from the flue gas stream. A high R-value also causes an increased vapour pressure of NH₃, which potentially increases slip of ammonia from absorber. Furthermore, it has been found that a high temperature is beneficial for the kinetics of the capture of CO₂. A high temperature also increases the vapour pressure of NH₃.

As illustrated in Fig. 3, the recirculated CO₂-enriched solution, supplied via pipe 74, enters absorber 18, location AA, at an R-value of 1.88 (CO₂ loading = 0.53). Typically, the R-value of the recirculated CO₂-enriched solution entering absorber 18 would be in the range of 1.75 to 2.00. As an effect of CO₂ being captured from the flue gas stream in the second stage 56 the R-value gradually decreases to about 1.80 (CO₂ loading = 0.556), which is the R-value in location BB.

The liquid to gas ratio, i.e. the amount of recirculated CO₂-enriched solution passing through mass transfer device 62 of the second stage 56 in relation to the amount of flue gas passing through mass transfer device 62 of the second stage 56, also referred to as L/G, is, in the simulation, about 6 kg of recirculated CO₂-enriched ammoniated solution per kg of flue gas, as viewed in location AA. Typically, the L/G of the second stage 56, as viewed in location AA, is 3 to 10, and more preferably 4 to 8, kg solution / kg flue gas. It will be appreciated that the L/G is not absolutely constant through the mass transfer device 62 since capture of CO₂ and NH₃ in the solution causes a transfer of mass from the flue gas stream to the solution. Typically, the concentration of ammonia, NH₃, of the CO₂-lean ammoniated solution and of the recirculated CO₂-enriched ammoniated solution would be in the range of 4-12 mole NH₃ per litre of solution. The corresponding concentration of carbon dioxide, CO₂, can be calculated from the respective R-value of the solution in question.

The CO₂-lean solution supplied via pipe 34 has an R-value of about 3.0. Typically, the R-value of the CO₂-lean solution in pipe 34 would be in the range of 2.5 to 4.50. In location CC the CO₂-lean solution is mixed with the partly spent recirculated CO₂-enriched solution having passed through second stage 56. As an effect of such mixing, the R-value, in location CC, becomes about 2.09 (CO₂ loading = 0.478). Typically, the R-value of the mixture in location CC would be in the range of 1.90 to 2.40. Such a high R-value means that a very efficient capture of CO2 in first stage 54 can be obtained. As an effect of CO₂ being captured from the flue gas stream in the first stage 54 the R-value gradually decreases to about 1.88 (CO₂ loading = 0.53), which is the R-value in location DD. Typically, the R-value of the ammoniated solution is within the range 1.70 to 2.00 in location DD. Solution with an R-value of about 1.88 is, hence, collected in tank 66, and is partly returned to second stage 56, via pipe 74, and partly forwarded to the regenerator 22, illustrated in Fig. 1, via pipe 20.

The liquid to gas ratio, L/G, i.e. the amount of the mixture of the recirculated CO₂-enriched solution and the CO₂-lean solution passing through mass transfer device 58 of the first stage 54 in relation to the amount of flue gas passing through mass transfer device 58 of the first stage 54 is, in the simulation, about 12 kg of the mixture of recirculated CO₂-enriched solution and CO₂-lean solution per kg of flue gas, as viewed in location CC. Typically, the L/G of the first stage 54, as viewed in location CC, is 5 to 16, more preferably 7 to 12, and most preferably 8 to 10 kg solution / kg flue gas. It will be appreciated that the L/G is not absolutely constant through the mass transfer device 58 since capture of CO₂ and NH₃ in the solution causes a transfer of mass from the flue gas stream to the solution.

According to one embodiment, the L/G is controlled by controlling the valves 84, 86. For example, increasing the degree of opening of valve 84 and reducing the degree of opening of valve 86 reduces the L/G in the second absorption stage 56.

Fig. 4 illustrates the temperature of the ammoniated solution in various positions of the absorber 18 illustrated in Fig. 2, as obtained from the simulation of the performance of the absorber 18. The temperature of the ammoniated solution in a specific location is almost the same as the temperature of the flue gas stream in that same location.

As illustrated in Fig. 4, the recirculated CO₂-enriched solution, supplied via pipe 74, enters absorber 18, location AA, at a temperature of about 10°C. Typically, the temperature of the recirculated CO₂-enriched solution entering absorber 18 would be in the range of 8-30°C. In particular if a third absorption stage 90 is included a rather high temperature, preferably 20-25°C, would be suitable for the recirculated CO₂-enriched solution entering absorber 18 via pipe 98. However, the computer simulation illustrated in Figs. 3-5 was made with only the first and second stages 54, 56, and in such a case a lower temperature, such as 10°C, is suitable to achieve a low ammonia slip. Heat exchanger 78, illustrated in Fig. 2, utilizing, for example, cooling water from a cooling tower for the cooling, is utilized for cooling the CO₂-enriched solution in pipe 74 to such desired temperature. As an effect of CO₂ being captured from the flue gas stream in the second stage 56 in an exothermic reaction, and the fact that the flue gas stream heats the recirculated CO₂-enriched solution upon contact therewith in the mass transfer device 62 of the second stage 56, the temperature gradually increases to about 15°C, which is the temperature in location BB.

In Fig. 4 a dashed line referred to as "solidification" has been introduced to illustrate that temperature below which ammonium bicarbonate particles may start to precipitate from the ammoniated solution, given the R-values illustrated in Fig. 3. Hence, for example, in location AA, with an R-value of 1.88, the solidification temperature is about 4°C. Thus, throughout the second stage 56 the temperature is above the solidification temperature, and no, or almost no, precipitation of ammonium bicarbonate particles occurs. Still, a temperature of 10°C in location AA results in a low vapour pressure of ammonia, and a low ammonia slip, as will be demonstrated hereinafter.

The CO₂-lean solution supplied via pipe 34 has a temperature, upon entering the first stage 54 of the absorber 18, i.e., downstream of the further heat exchanger 82, of about 30°C. Typically, the temperature of the CO₂-lean solution entering absorber 18 would be in the range of 20-40°C. In location CC the CO₂-lean solution is mixed with the partly spent recirculated CO₂-enriched solution having passed through second stage 56. As an effect of such mixing, the temperature, in location CC, becomes about 25°. Typically, the temperature of the mixture of the CO₂-lean solution and the partly spent recirculated CO₂-enriched solution in location CC would be in the range of 20-30°C. Such a relatively high temperature has been found to be positive to the kinetics of the CO₂ absorption, and means that a very efficient capture of CO₂ in first stage 54 can be obtained. As an effect of CO₂ being captured from the flue gas stream in the first stage 54 in an exothermic reaction, and the fact that the flue gas stream heats the CO₂-enriched solution upon contact therewith in the mass transfer device 58 of the first stage 54, the temperature gradually increases to about 29°C, which is the temperature in location DD. Solution with temperature of about 29°C is, hence, collected in tank 66.

Throughout the first stage 54 the temperature is well above the solidification temperature, dashed line "solidification" in Fig. 4, and no, or almost no, precipitation of ammonium bicarbonate particles occurs.

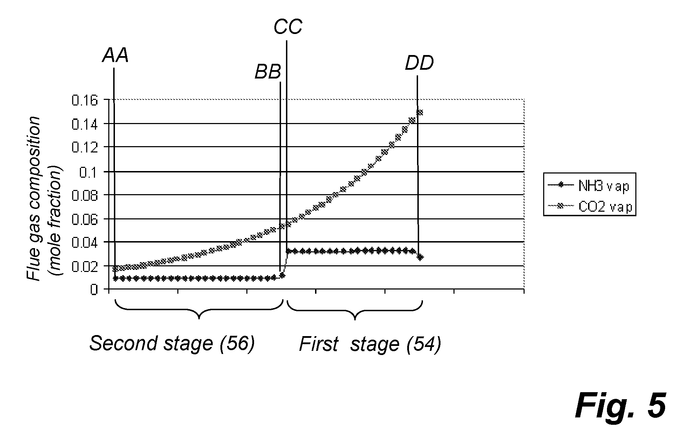

Fig. 5 is a diagram illustrating the molar fractions of carbon dioxide, CO₂, and ammonia, NH₃, of the flue gas stream FG in various positions of the CO₂-absorber 18 of Fig. 2.

The CO₂-rich flue gas stream FG entering absorber 18 via inlet 50 contains a large amount of CO₂. Almost immediately upon entering into tower 48 ammonia, NH₃, will evaporate from the ammoniated solution, due to the equilibrium conditions at the R-value and temperature demonstrated hereinabove, and mix with the flue gas stream, FG. Hence, in location DD, just before entering the first stage 54, the flue gas stream FG will contain CO₂ in a molar fraction of about 0.15, and NH₃ in a molar fraction of about 0.03.

While passing through the mass transfer device 58 of the first stage 54 the solution will efficiently capture CO₂. Hence, in location CC, just after leaving the first stage 54, the partly cleaned flue gas stream FG will contain CO₂ in a molar fraction of about 0.055, and NH₃ in a molar fraction of about 0.035.

The lower temperature and lower R-value of the recirculated CO₂-enriched ammoniated solution of the second stage 56 will shift the equilibrium conditions with regard to ammonia. Hence, in location BB, just before entering the second stage 54, the partly cleaned flue gas stream FG will contain CO₂ in a molar fraction of about 0.055, and NH₃ in a molar fraction of about 0.01.

While passing through the mass transfer device 62 of the second stage 56 the solution will capture CO₂. Hence, in location AA, just after leaving the second stage 56, the flue gas stream FG will contain CO₂ in a molar fraction of about 0.018, and NH₃ in a molar fraction of about 0.01.

With the absorber 18 described hereinbefore, a low slip of ammonia, NH₃, is achieved, thanks to the conditions of the second stage 56. Very efficient capture of carbon dioxide, CO₂, is achieved in the first stage 54, and capture of carbon dioxide continues also in the second stage 56. The total L/G is about 12 kg solution / kg flue gas, which is typically in the range of 10-20% lower than the three absorber process illustrated in the prior art document WO 2009/055419. Correspondingly electrical power supply may be reduced by about 10%, since the amount of solution pumped in the absorber is reduced. Furthermore, the absorber 18 is significantly simpler as regards construction and ancillary equipment, causing savings in capital and maintenance costs of at least 10%. Furthermore, the relatively high temperature of the solutions and the high R-values increases CO₂ capture efficiency and reduces the required volume of the mass transfer devices 58 and 62, thereby reducing the size and height of the tower 48. Still further, the amount of energy consumed in the refrigeration unit is reduced, since solutions circulating in the absorber 18 are typically cooled to, on average, an as high temperature as 20°C. If cooling water from a cooling tower is available, the energy consumption could be even further reduced.

It will be appreciated that numerous variants of the embodiments described above are possible within the scope of the appended claims.

Hereinbefore it has been described that the absorber 18 comprises a single tower 48. It will be appreciated that the absorber could also comprise more than one tower. For example, the second stage 56 could be arranged in a first tower which is separate from a second tower in which the first stage 54 is arranged, with flue gas stream and solution being transferred between the two towers.

Hereinbefore, it has been described that the mass transfer devices 58, 62 may comprise structured or random packing. It will be appreciated that other mass transfer devices that provide efficient contact between solution and flue gas stream could also be arranged inside the tower.

Hereinbefore, it has been described that the L/G may, preferably, be 5 to 16 kg solution / kg flue gas in the first absorption stage 54, and 3 to 10 kg solution / kg flue gas in the second absorption stage 56. If the absorber 18 is provided with the optional third absorption stage 90, then the L/G of that third stage 90 would, preferably, be 0.5 to 2.5 kg solution / kg flue gas. The L/G of the second absorption stage 56 could remain unaffected, since in one embodiment the solution that has passed through the third stage 90, when present, would subsequently pass through the second stage 56 along with the solution supplied thereto.

## Claims

1. A method of capturing CO₂ from a flue gas stream in a CO₂-absorber (18), the method comprising:
- providing, between a first absorption stage (54) and a second absorption stage (56) of the CO₂-absorber, a CO₂-lean ammoniated solution,
- contacting, in the first absorption stage (54) of the CO₂-absorber, the flue gas stream (FG) with a mixture of the CO₂-lean ammoniated solution, a first portion of recirculated CO₂-enriched ammoniated solution having passed through the second absorption stage (56), and a second portion of recirculated CO₂-enriched ammoniated solution having passed through a third absorption stage (90) and the second absorption stage (56) to form a partly cleaned flue gas stream,
- providing, between the second absorption stage (56) and the third absorption stage (90) of the CO₂-absorber, the first portion of recirculated CO₂-enriched ammoniated solution,
- contacting, in the second absorption stage (56) of the CO₂-absorber, the partly cleaned flue gas stream with a mixture of the first portion of the recirculated CO₂-enriched ammoniated solution and the second portion of the recirculated CO₂-enriched ammoniated solution having passed through the third absorption stage (90) to form a cleaned flue gas stream,
- providing, above the third absorption stage (90) of the CO₂-absorber, the second portion of recirculated CO₂-enriched ammoniated solution,
- contacting, in the third absorption stage (90) of the CO₂-absorber, the cleaned flue gas stream with the second portion of the recirculated CO₂-enriched ammoniated solution to form a further cleaned flue gas stream,
- wherein the partly cleaned flue gas stream is passed vertically upwards from the first absorption stage (54) to the second absorption stage (56) and from the second absorption stage (56) to the third absorption stage (90), and wherein the second portion of the recirculated CO₂-enriched ammoniated solution is passed vertically downwards from the third absorption stage (90) to the second absorption stage (56), and wherein the first and second portions of the recirculated CO₂-enriched ammoniated solution are passed vertically downwards from the second absorption stage (56) to the first absorption stage (54),forming a collected CO₂-enriched ammoniated solution by collecting the mixture of CO₂-lean ammoniated solution and the first and second portions of recirculated CO₂-enriched ammoniated solution after having passed through the first absorption stage (54),
- passing a first portion of the collected CO₂-enriched ammoniated solution for regeneration for removing CO₂ from the first portion of the collected CO₂-enriched ammoniated solution to form the CO₂-lean ammoniated solution and cooling the CO₂-lean ammoniated solution in a first heat exchanger (82) to a temperature in the range of 20 to 40°C before providing it to the CO₂-absorber, utilizing a second portion of the collected CO₂-enriched ammoniated solution to form the first portion of the recirculated CO₂-enriched ammoniated solution by cooling the second portion of the collected CO₂-enriched ammoniated solution in a second heat exchanger (78) to a temperature in the range of 20 to 25°C, and
- utilizing a third portion of the collected CO₂-enriched ammoniated solution to form the second portion of the recirculated CO₂-enriched ammoniated solution by cooling the third portion of the collected CO₂-enriched ammoniated solution the second heat exchanger (78) and in a third heat exchanger (104) to a temperature in the range of 0 to 10°C.

2. A method according to claim 1, further comprising forwarding the CO₂-lean ammoniated solution through the first absorption stage (54) without forwarding the CO₂-lean ammoniated solution through the second absorption stage (56).

3. A method according to claim 1 or 2, wherein the first and second portions of the recirculated CO₂-enriched ammoniated solution and the CO₂-lean ammoniated solution are kept at a temperature, while passing through the first, second and third absorption stages (54, 56, 90), which is above a temperature at which ammonium bicarbonate particles may start to precipitate from the respective ammoniated solution.

4. A method according to any one of the preceding claims, wherein the R-value, being the molar concentration of NH₃ divided by the molar concentration of CO₂, of the first portion of the recirculated CO₂-enriched ammoniated solution supplied to the second absorption stage (56) is within the range of 1.75 to 2.00.

5. A method according to any one of the preceding claims, wherein the R-value, being the molar concentration of NH₃ divided by the molar concentration of CO₂, of the CO₂-lean ammoniated solution supplied to the first absorption stage (54) is within the range of 2.5 to 4.5.

6. A method according to any one of the preceding claims, wherein the R-value of the ammoniated solution is within the range of 1.70 to 2.80 throughout the entire first absorption stage (54).

7. A method according to any one of the preceding claims, wherein the R-value of the mixture of the first and second portions of the recirculated CO₂-enriched ammoniated solution entering to the second absorption stage (56) is lower than the R-value of the mixture of recirculated CO₂-enriched ammoniated solution and the CO₂-lean ammoniated solution entering the first absorption stage (54).

8. A method according to any one of the preceding claims, wherein the liquid to gas ratio, L/G, on a mass basis is 5 to 16 kg solution / kg flue gas in the first absorption stage (54), and is 3 to 10 kg solution / kg flue gas in the second absorption stage (56).

9. A method according to any one of the preceding claims, wherein the first portion of the collected CO₂-enriched ammoniated solution comprises 30 to 70 % by weight of the collected CO₂-enriched ammoniated solution, and wherein the second portion of the collected CO₂-enriched ammoniated solution comprises 70 to 30 % by weight of the collected CO₂-enriched ammoniated solution.

10. A method according to any one of the preceding claims, wherein 4-30% of the total flow of the CO₂-lean ammoniated solution forwarded to the CO₂-absorber (18) is forwarded to the second absorption stage (56) for contacting the partly cleaned flue gas stream.

11. A method according to any one of the preceding claims, wherein 0-5% of the total flow of the CO₂-lean ammoniated solution forwarded to the CO₂-absorber (18) is forwarded to the third absorption stage (90) for contacting the cleaned flue gas stream.

12. A system for capturing CO₂ from a flue gas stream comprises:
- a CO₂ absorber (18) comprising a first absorption stage (54), a second absorption stage (56) and a third absorption stage (90),
- an inlet (50) for forwarding a flue gas stream (FG) to the first absorption stage (54),
- a first liquid distributor (60) disposed between the first absorption stage (54) and the second absorption stage (56) to provide a CO₂-lean ammoniated solution,
- first contacting means (58) for contacting, in the first absorption stage (54), the flue gas stream (FG) with a mixture of CO₂-lean ammoniated solution, a first portion of recirculated CO₂-enriched ammoniated solution having passed through the second absorption stage (56), and a second portion of recirculated CO2-enriched ammoniated solution having passed through a third absorption stage (90) and the second absorption stage (56) to form a partly cleaned flue gas stream,
- a transfer device (75) for transferring the partly cleaned flue gas stream from the first absorption stage (54) to the second absorption stage (56),
- a second liquid distributor (64) disposed between the second absorption stage (56) and the third absorption stage (90) to provide the first portion of the CO₂-enriched ammoniated solution,
- second contacting means (62) for contacting, in the second absorption stage (56), the partly cleaned flue gas stream with the first portion of the recirculated CO₂-enriched ammoniated solution and the second portion of recirculated CO2-enriched ammoniated solution having passed through the third absorption stage (90) to form a cleaned flue gas stream,
- a third liquid distributor (94) disposed above the third absorption stage (90) to provide the second portion of the CO₂-enriched ammoniated solution,
- third contacting means (92) for contacting, in the third absorption stage (90), the cleaned flue gas stream with the second portion of recirculated CO2-enriched ammoniated solution to form a further cleaned flue gas stream,
- an outlet (52) for cleaned flue gas stream forwarded from the second absorption stage (56),
- a device (66) for collecting the mixture of CO₂-lean ammoniated solution and the first and second portions of the recirculated CO₂-enriched ammoniated solution after having passed through the first absorption stage (54) to form a collected CO₂-enriched ammoniated solution,
- a CO₂-enriched solution pipe (20) for passing a first portion of the collected CO₂-enriched ammoniated solution for regeneration for removing CO₂ from the first portion of the collected CO₂-enriched ammoniated solution to form the CO₂-lean ammoniated solution,
- a CO₂-lean solution pipe (34) for passing the CO₂-lean ammoniated solution from regeneration to the first absorption stage (54) by the first liquid distributor (60),
- a first recirculation pipe (74) for passing a second portion of the collected CO₂-enriched ammoniated solution to the second absorption stage (56) by the second liquid distributor (64) to form the first portion of the recirculated CO₂-enriched ammoniated solution, and
- a second recirculation pipe (96) for passing a third portion of the collected CO₂-enriched ammoniated solution to the third absorption stage (90) by the third liquid distributor (94) to form the second portion of the recirculated CO₂-enriched ammoniated solution,
- a first heat exchanger (82) arranged on the CO₂-lean solution pipe (34) configured to cool the CO₂-lean ammoniated solution to a temperature in the range of 20 to 40°C prior to being supplied to the first absorption stage (54),
- a second heat exchanger (78) arranged on the recirculation pipe (74) configured to cool the recirculated CO₂-enriched ammoniated solution to a temperature in the range of 20 to 25°C prior to being supplied to the second absorption stage (56), and
- a third heat exchanger (104) arranged on the recirculation pipe (96) configured to cool the recirculated CO₂-enriched ammoniated solution to a temperature in the range of 0 to 10°C prior to being supplied to the third liquid distributor (94).

13. A system according to claim 12, wherein the absorber comprises a single tower (48) housing the first, second and third contacting means (58, 60, 62, 64, 92, 94) with the second contacting means (62, 64) being located vertically above the first contacting means (58, 60) inside the tower (48), and the third contacting means being located vertically above the second contacting means (92, 94).

## Patentansprüche

1. Verfahren zur Rückhaltung von CO₂ aus einem Abgasstrom in einem CO₂-Absorber (18), wobei das Verfahren Folgendes umfasst:
- die Bereitstellung, zwischen einer ersten Absorptionsstufe (54) und einer zweiten Absorptionsstufe (56) des CO₂-Absorbers, einer CO₂-mageren ammonisierten Lösung,
- das Kontaktieren, in der ersten Absorptionsstufe (54) des CO₂-Absorbers, des Abgasstroms (FG) mit einer Mischung der CO₂-mageren ammonisierten Lösung, eines ersten Teils der rezirkulierten CO₂-angereicherten ammonisierten Lösung, der die zweite Absorptionsstufe (56) durchlaufen hat, und eines zweiten Teils der rezirkulierten CO₂-angereicherten ammonisierten Lösung, der eine dritte Absorptionsstufe (90) und die zweite Absorptionsstufe (56) durchlaufen hat, unter Bildung eines teilaufgereinigten Abgasstroms,
- die Bereitstellung, zwischen der zweiten Absorptionsstufe (56) und der dritten Absorptionsstufe (90) des CO₂-Absorbers, des ersten Teils der rezirkulierten CO₂-angereicherten ammonisierten Lösung,
- das Kontaktieren, in der zweiten Absorptionsstufe (56) des CO₂-Absorbers, des teilaufgereinigten Abgasstroms mit einer Mischung des ersten Teils der rezirkulierten CO₂-angereicherten ammonisierten Lösung und des zweiten Teils der rezirkulierten CO₂-angereicherten ammonisierten Lösung, die die dritte Absorptionsstufe (90) durchlaufen hat, unter Bildung eines aufgereinigten Abgasstroms,
- die Bereitstellung, über der dritten Absorptionsstufe (90) des CO₂-Absorbers, des zweiten Teils der rezirkulierten CO₂-angereicherten ammonisierten Lösung,
- das Kontaktieren, in der dritten Absorptionsstufe (90) des CO₂-Absorbers, des aufgereinigten Abgasstroms mit dem zweiten Teil der rezirkulierten CO₂-angereicherten ammonisierten Lösung, unter Bildung eines weiteren aufgereinigten Abgasstroms,
- wobei der teilaufgereinigte Abgasstrom vertikal von der ersten Absorptionsstufe (54) zur zweiten Absorptionsstufe (56) und von der zweiten Absorptionsstufe (56) zur dritten Absorptionsstufe (90) hochgeleitet wird, und wobei der zweite Teil der rezirkulierten CO₂-angereicherten ammonisierten Lösung vertikal von der dritten Absorptionsstufe (90) zur zweiten Absorptionsstufe (56) heruntergeleitet wird, und wobei der erste und der zweite Teil der rezirkulierten CO₂-angereicherten ammonisierten Lösung vertikal von der zweiten Absorptionsstufe (56) zur ersten Absorptionsstufe (54) heruntergeleitet wird, unter Bildung einer gesammelten CO₂-angereicherten ammonisierten Lösung durch Sammeln der Mischung der CO₂-mageren ammonisierten Lösung und des ersten und zweiten Teils der rezirkulierten CO₂-angereicherten ammonisierten Lösung nach Durchlaufen der ersten Absorptionsstufe (54),
- das Durchleiten eines ersten Teils der gesammelten CO₂-angereicherten ammonisierten Lösung zur Regenerierung zum Entfernen von CO₂ aus dem ersten Teil der gesammelten CO₂-angereicherten ammonisierten Lösung unter Bildung der CO₂-mageren ammonisierten Lösung und Abkühlen der CO₂-mageren ammonisierten Lösung in einem ersten Wärmeaustauscher (82) auf eine Temperatur im Bereich von 20 bis 40°C vor deren Bereitstellung zum CO₂-Absorber, die Verwendung eines zweiten Teils der gesammelten CO₂-angereicherten ammonisierten Lösung unter Bildung des ersten Teils der rezirkulierten CO₂-angereicherten ammonisierten Lösung durch Abkühlen des zweiten Teils der gesammelten CO₂-angereicherten ammonisierten Lösung in einem zweiten Wärmeaustauscher (78) auf eine Temperatur im Bereich von 20 bis 25° C, und
- die Verwendung eines dritten Teils der gesammelten CO₂-angereicherten ammonisierten Lösung unter Bildung des zweiten Teils der rezirkulierten CO₂-angereicherten ammonisierten Lösung durch Abkühlen des dritten Teils der gesammelten CO₂-angereicherten ammonisierten Lösung dem zweiten Wärmeaustauscher (78) und in einem dritten Wärmeaustauscher (104) auf eine Temperatur im Bereich von 0 bis 10° C.

2. Verfahren nach Anspruch 1, welches weiterhin das Weiterleiten der CO₂-mageren ammonisierten Lösung durch die erste Absorptionsstufe (54) ohne Weiterleiten der CO₂-mageren ammonisierten Lösung durch die zweite Absorptionsstufe (56) umfasst.

3. Verfahren nach Anspruch 1 oder 2, wobei der erste und der zweite Teil der rezirkulierten CO₂-angereicherten ammonisierten Lösung und der CO₂-mageren ammonisierten Lösung bei einer Temperatur gehalten werden, während sie die erste, die zweite und die dritte Absorptionsstufe (54, 56, 90) durchlaufen, welche über der Temperatur liegt, bei der Ammoniumhydrogencarbonatpartikel aus der jeweiligen ammonisierten Lösung beginnen können auszufallen.

4. Verfahren nach einem der vorhergehenden Ansprüche, wobei der R-Wert, bei dem es sich um die molare NH₃-Konzentration geteilt durch die molare CO₂-Konzentration handelt, des ersten Teils der rezirkulierten CO₂-angereicherten ammonisierten Lösung, die der zweiten Absorptionsstufe (56) zugeführt wird, im Bereich von 1,75 bis 2,00 liegt.

5. Verfahren nach einem der vorhergehenden Ansprüche, wobei der R-Wert, bei dem es sich um die molare NH₃-Konzentration geteilt durch die molare CO₂-Konzentration handelt, der CO₂-mageren ammonisierten Lösung, die der ersten Absorptionsstufe (54) zugeführt wird, im Bereich von 2,5 bis 4,5 liegt.

6. Verfahren nach einem der vorhergehenden Ansprüche, wobei der R-Wert der ammonisierten Lösung während der gesamten ersten Absorptionsstufe (54) im Bereich von 1,70 bis 2,80 liegt.

7. Verfahren nach einem der vorhergehenden Ansprüche, wobei der R-Wert der Mischung des ersten und des zweiten Teils der rezirkulierten CO₂-angereicherten ammonisierten Lösung, die in die zweite Absorptionsstufe (56) eintritt, niedriger ist als der R-Wert der Mischung der rezirkulierten CO₂-angereicherten ammonisierten Lösung und der CO₂-mageren ammonisierten Lösung, die in die erste Absorptionsstufe (54) eintritt.

8. Verfahren nach einem der vorhergehenden Ansprüche, wobei das Flüssigkeit/Gas-Verhältnis, L/C, bezogen auf die Masse, in der ersten Absorptionsstufe (54) 5 bis 16 kg Lösung / kg Abgas beträgt und in der zweiten Absorptionsstufe (56) 3 bis 10 kg Lösung / kg Abgas beträgt.

9. Verfahren nach einem der vorhergehenden Ansprüche, wobei der erste Teil der gesammelten CO₂-angereicherten ammonisierten Lösung 30 bis 70 Gew.-% der gesammelten CO₂-angereicherten ammonisierten Lösung umfasst und wobei der zweite Teil der gesammelten CO₂-angereicherten ammonisierten Lösung 70 bis 30 Gew.-% der gesammelten CO₂-angereicherten ammonisierten Lösung umfasst.

10. Verfahren nach einem der vorhergehenden Ansprüche, wobei 4-30% des gesamten zum CO₂-Absorber (18) weitergeleiteten Stroms der CO₂-mageren ammonisierten Lösung zur zweiten Absorptionsstufe (56) zum Kontaktieren des teilaufgereinigten Abgasstroms weitergeleitet wird.

11. Verfahren nach einem der vorhergehenden Ansprüche, wobei 0-5% des gesamten zum CO₂-Absorber (18) weitergeleiteten Stroms der CO₂-mageren ammonisierten Lösung zur dritten Absorptionsstufe (90) zum Kontaktieren des aufgereinigten Abgasstroms weitergeleitet wird.

12. System zur Rückhaltung von CO₂ aus einem Abgasstrom, umfassend:
- einen CO₂-Absorber (18), der eine erste Absorptionsstufe (54), eine zweite Absorptionsstufe (56) und eine dritte Absorptionsstufe (90) umfasst,
- einen Einlass (50) zum Weiterleiten eines Abgasstroms (FG) zur ersten Absorptionsstufe (54),
- einen ersten Flüssigkeitsverteiler (60), der sich zwischen der ersten Absorptionsstufe (54) und der zweiten Absorptionsstufe (56) befindet, zur Bereitstellung einer CO₂-mageren ammonisierten Lösung,
- ein erstes Kontaktierungsmittel (58) zum Kontaktieren, in der ersten Absorptionsstufe (54), des Abgasstroms (FG) mit einer Mischung von CO₂-magerer ammonisierter Lösung, einem ersten Teil der rezirkulierten CO₂-angereicherten ammonisierten Lösung, der die zweite Absorptionsstufe (56) durchlaufen hat, und einem zweiten Teil der rezirkulierten CO₂-angereicherten ammonisierten Lösung, der eine dritte Absorptionsstufe (90) und die zweite Absorptionsstufe (56) durchlaufen hat, unter Bildung eines teilaufgereinigten Abgasstroms,
- eine Überführungsvorrichtung (75) zum Überführen des teilaufgereinigten Abgasstroms von der ersten Absorptionsstufe (54) zur zweiten Absorptionsstufe (56),
- einen zweiten Flüssigkeitsverteiler (64), der sich zwischen der zweiten Absorptionsstufe (56) und der dritten Absorptionsstufe (90) befindet, zur Bereitstellung des ersten Teils der CO₂-angereicherten ammonisierten Lösung,
- ein zweites Kontaktierungsmittel (62) zum Kontaktieren, in der zweiten Absorptionsstufe (56), des teilaufgereinigten Abgasstroms mit dem ersten Teil der rezirkulierten CO₂-angereicherten ammonisierten Lösung und dem zweiten Teil der rezirkulierten CO₂-angereicherten ammonisierten Lösung, die die dritte Absorptionsstufe (90) durchlaufen hat, unter Bildung eines aufgereinigten Abgasstroms,
- einen dritten Flüssigkeitsverteiler (94), der sich über der dritten Absorptionsstufe (90) befindet, zur Bereitstellung des zweiten Teils der CO₂-angereicherten ammonisierten Lösung,
- ein drittes Kontaktierungsmittel (92) zum Kontaktieren, in der dritten Absorptionsstufe (90), des aufgereinigten Abgasstroms mit dem zweiten Teil der rezirkulierten CO₂-angereicherten ammonisierten Lösung, unter Bildung eines weiter aufgereinigten Abgasstroms,
- einen Auslass (52) für den von der zweiten Absorptionsstufe (56) weitergeleiteten Abgasstrom,
- eine Vorrichtung (66) zum Sammeln der Mischung der CO₂-mageren ammonisierten Lösung und des ersten und des zweiten Teils der rezirkulierten CO₂-angereicherten ammonisierten Lösung nach Durchlaufen der ersten Absorptionsstufe (54) unter Bildung einer gesammelten CO₂-angereicherten ammonisierten Lösung,
- eine Leitung (20) für die CO₂-angereicherte Lösung zum Weiterleiten eines ersten Teils der gesammelten CO₂-angereicherten ammonisierten Lösung zur Regenerierung zum Entfernen von CO₂ aus dem ersten Teil der gesammelten CO₂-angereicherten ammonisierten Lösung unter Bildung der CO₂-mageren ammonisierten Lösung,
- eine Leitung (34) für die CO₂-magere Lösung zum Weiterleiten der CO₂-mageren ammonisierten Lösung aus der Regenerierung zur ersten Absorptionsstufe (54) über den ersten Flüssigkeitsverteiler (60),
- eine erste Rezirkulierungsleitung (74) zum Weiterleiten eines zweiten Teils der gesammelten CO₂-angereicherten ammonisierten Lösung zur zweiten Absorptionsstufe (56) über den zweiten Flüssigkeitsverteiler (64) unter Bildung des ersten Teils der rezirkulierten CO₂-angereicherten ammonisierten Lösung, und
- eine zweite Rezirkulierungsleitung (96) zum Weiterleiten eines dritten Teils der gesammelten CO₂-angereicherten ammonisierten Lösung zur dritten Absorptionsstufe (90) über den dritten Flüssigkeitsverteiler (94) unter Bildung des zweiten Teils der rezirkulierten CO₂-angereicherten ammonisierten Lösung,
- einen ersten Wärmeaustauscher (82), angeordnet an der Leitung (34) für die CO₂-magere Lösung, konfiguriert zum Abkühlen der CO₂-mageren ammonisierten Lösung auf eine Temperatur im Bereich von 20 bis 40°C vor der Zuführung zur ersten Absorptionsstufe (54),
- einen zweiten Wärmeaustauscher (78), angeordnet an der Rezirkulierungsleitung (74), konfiguriert zum Abkühlen der rezirkulierten CO₂-angereicherten ammonisierten Lösung auf eine Temperatur im Bereich von 20 bis 25° C vor der Zuführung zur zweiten Absorptionsstufe (56), und
- einen dritten Wärmeaustauscher (104), angeordnet an der Rezirkulierungsleitung (96), konfiguriert zum Abkühlen der rezirkulierten CO₂-angereicherten ammonisierten Lösung auf eine Temperatur im Bereich von 0 bis 10° C vor der Zuführung zum dritten Flüssigkeitsverteiler (94).

13. System nach Anspruch 12, wobei der Absorber einen einzelnen Turm (48) umfasst, in dem das erste, das zweite und das dritte Kontaktierungsmittel (58, 60, 62, 64, 92, 94) untergebracht sind, wobei sich das zweite Kontaktierungsmittel (62, 64) vertikal über dem ersten Kontaktierungsmittel (58, 60) im Turm (48) befindet und sich das dritte Kontaktierungsmittel vertikal über dem zweiten Kontaktierungsmittel (92, 94) befindet.

## Revendications

1. Procédé de capture de CO₂ d'un flux de gaz de combustion dans un absorbeur de CO₂ (18), le procédé comprenant :
- la production, entre un premier étage d'absorption (54) et un deuxième étage d'absorption (56) de l'absorbeur de CO₂, d'une solution ammoniaquée pauvre en CO₂,
- la mise en contact, dans le premier étage d'absorption (54) de l'absorbeur de CO₂, du flux de gaz de combustion (FG) avec un mélange de la solution ammoniaquée pauvre en CO₂, d'une première portion de solution ammoniaquée enrichie en CO₂ recirculée étant passée à travers le deuxième étage d'absorption (56), et d'une deuxième portion de solution ammoniaquée enrichie en CO₂ recirculée étant passée à travers un troisième étage d'absorption (90) et le deuxième étage d'absorption (56) pour former un flux de gaz de combustion partiellement nettoyé,
- la production, entre le deuxième étage d'absorption (56) et le troisième étage d'absorption (90) de l'absorbeur de CO₂, de la première portion de solution ammoniaquée recirculée enrichie en CO₂,
- la mise en contact, dans le deuxième étage d'absorption (56) de l'absorbeur de CO₂, du flux de gaz de combustion partiellement nettoyé avec un mélange de la première portion de solution ammoniaquée enrichie en CO₂ recirculée et de la deuxième portion de solution ammoniaquée enrichie en CO₂ recirculée étant passé à travers le troisième étage d'absorption (90) pour former un flux de gaz de combustion nettoyé,
- la production, au-dessus du troisième étage d'absorption (90) de l'absorbeur de CO₂, de la deuxième portion de solution ammoniaquée enrichie en CO₂ recirculée,
- la mise en contact, dans le troisième étage d'absorption (90) de l'absorbeur de CO₂, du flux de gaz de combustion nettoyé avec la deuxième portion de solution ammoniaquée enrichie en CO₂ recirculée, pour former un nouveau flux de gaz de combustion nettoyé,
- le flux de gaz de combustion partiellement nettoyé étant passé verticalement vers le haut depuis le premier étage d'absorption (54) jusqu'au deuxième étage d'absorption (56) et du deuxième étage d'absorption (56) jusqu'au troisième étage d'absorption (90), et la deuxième portion de solution ammoniaquée enrichie en CO₂ recirculée étant passée verticalement vers le bas depuis le troisième étage d'absorption (90) jusqu'au deuxième étage d'absorption (56), et les première et deuxième portions de la solution ammoniaquée enrichie en CO₂ recirculée étant passées verticalement vers le bas depuis le deuxième étage d'absorption (56) jusqu'au premier étage d'absorption (54), formant une solution ammoniaquée enrichie en CO₂ collectée en collectant le mélange de solution ammoniaquée pauvre en CO₂ et les première et deuxième portions de la solution ammoniaquée enrichie en CO₂ recirculée après passage par le premier étage d'absorption (54),
- le passage d'une première portion de la solution ammoniaquée enrichie en CO₂ collectée pour régénération pour élimination du CO₂ de la première portion de la solution ammoniaquée enrichie en CO₂ collectée pour former la solution ammoniaquée pauvre en CO₂ et refroidissement de la solution ammoniaquée pauvre en CO₂ dans le premier échangeur de chaleur (82) à une température dans la gamme entre 20 et 40°C avant d'en alimenter l'absorbeur de CO₂, en utilisant une deuxième portion de solution ammoniaquée enrichie en CO₂ recirculée pour former la première portion de solution ammoniaquée enrichie en CO₂ recirculée en refroidissant la deuxième portion de solution ammoniaquée enrichie en CO₂ collectée dans un deuxième échangeur de chaleur (78) à une température dans la gamme entre 20 et 25°C, et
- l'utilisation d'une troisième portion de la solution ammoniaquée enrichie en CO₂ collectée pour former la deuxième solution ammoniaquée enrichie en CO₂ recirculée en refroidissant la troisième portion de la solution ammoniaquée enrichie en CO₂ collectée dans le deuxième échangeur de chaleur (78) et dans un troisième échangeur de chaleur (104) jusqu'à une température dans la gamme entre 0 et 10°C.

2. Procédé selon la revendication 1, comprenant en outre de faire passer la solution ammoniaquée pauvre en CO₂ à travers le premier étage d'absorption (54) sans la faire passer par le deuxième étage d'absorption (56).

3. Procédé selon la revendication 1 ou 2, dans lequel, quand on les fait passer à travers les premier, deuxième et troisième étages d'absorption (54, 56, 90), les première et deuxième portions de la solution ammoniaquée enrichie en CO₂ recirculée et la solution ammoniaquée pauvre en CO₂ sont maintenues à une température supérieure à une température où des particules de bicarbonate d'ammonium risquent de commencer à précipiter hors de leur solution ammoniaquée respective.

4. Procédé selon l'une quelconque des revendications précédentes, dans lequel la valeur R, qui est la concentration molaire en NH₃ divisée par la concentration molaire en CO₂ de la première portion de la solution ammoniaquée enrichie en CO₂ recirculée (56) se situe dans la gamme de 1,75 à 2,00.

5. Procédé selon l'une quelconque des revendications précédentes, dans lequel la valeur R qui est la concentration molaire en NH₃ divisée par la concentration molaire en CO₂ de la solution ammoniaquée pauvre en CO₂ fournie au premier étage d'absorption (54) se situe dans la gamme de 2,5 à 4,5.

6. Procédé selon l'une quelconque des revendications précédentes, dans lequel la valeur R de la solution ammoniaquée se situe dans la gamme entre 1,70 et 2,80 à travers tout le premier étage d'absorption (54).

7. Procédé selon l'une quelconque des revendications précédentes, dans lequel la valeur R du mélange des première et deuxième portions de solution ammoniaquée enrichie en CO₂ recirculée entrant dans le deuxième étage d'absorption (56) est inférieure à la valeur R du mélange de la solution ammoniaquée enrichie en CO₂ recirculée et de la solution ammoniaquée pauvre en CO₂ entrant dans le premier étage d'absorption (54).

8. Procédé selon l'une quelconque des revendications précédentes, dans lequel le rapport liquide/gaz L/G, rapporté à une base pondérale, est de 5 à 16 kg solution / kg gaz de combustion dans le premier étage d'absorption (54) et est de 3 à 10 kg solution / kg gaz de combustion dans le deuxième étage d'absorption (56).

9. Procédé selon l'une quelconque des revendications précédentes, dans lequel la première portion de solution ammoniaquée enrichie en CO₂ collectée contient 30 à 70 % en poids de la solution ammoniaquée enrichie en CO₂ collectée, et dans lequel la deuxième portion de solution ammoniaquée enrichie en CO₂ collectée contient 70 à 30 % en poids de la solution ammoniaquée enrichie en CO₂ collectée.

10. Procédé selon l'une quelconque des revendications précédentes, dans lequel 4 à 30 % du débit total de la solution ammoniaquée pauvre en CO₂ envoyée jusqu'à l'absorbeur de CO₂ (18) sont envoyés jusqu'au deuxième étage d'absorption (56) pour être mis en contact avec le débit de gaz de combustion partiellement nettoyé.

11. Procédé selon l'une quelconque des revendications précédentes, dans lequel 0 à 5 % du débit total de la solution ammoniaquée pauvre en CO₂ envoyée jusqu'à l'absorbeur de CO₂ (18) sont envoyés jusqu'au troisième étage d'absorption (90) pour être mis en contact avec le débit de gaz de combustion nettoyé.

12. Système de capture de CO₂ dans un flux de gaz de combustion, comprenant :
- un absorbeur de CO₂ (18) comprenant un premier étage d'absorption (54), un deuxième étage d'absorption (56) et un troisième étage d'absorption (90),
- une entrée (50) pour envoyer un flux de gaz de combustion (FG) jusqu'au premier étage d'absorption (54),
- un premier distributeur de liquide (60) disposé entre le premier étage d'absorption (54) et le deuxième étage d'absorption (56) pour produire une solution ammoniaquée pauvre en CO₂,
- de premiers moyens de mise en contact (58) pour mettre en contact, dans le premier étage d'absorption (54), le flux de gaz de combustion (FG) avec un mélange de solution ammoniaquée pauvre en CO₂, d'une première portion de solution ammoniaquée enrichie en CO₂ recirculée étant passée à travers le deuxième étage d'absorption (56), et d'une deuxième portion de solution ammoniaquée enrichie en CO₂ recirculée étant passée à travers un troisième étage d'absorption (90) et le deuxième étage d'absorption (56) pour former un flux de gaz de combustion partiellement nettoyé,
- un dispositif de transfert (75) pour transférer le flux de gaz de combustion partiellement nettoyé depuis le premier étage d'absorption (54) jusqu'au deuxième étage d'absorption (56),
- un deuxième distributeur de liquide (64) disposé entre le deuxième étage d'absorption (56) et le troisième étage d'absorption (90) pour produire une première portion de la solution ammoniaquée enrichie en CO₂,
- de deuxièmes moyens de mise en contact (62) pour mettre en contact, dans le deuxième étage d'absorption (56), le flux de gaz de combustion partiellement nettoyé avec la première portion de la solution ammoniaquée enrichie en CO₂ et la deuxième portion de la solution ammoniaquée enrichie en CO₂ étant passée à travers le troisième étage d'absorption (90) pour former un flux de gaz de combustion nettoyé,
- un troisième distributeur de liquide (94) disposé au-dessus de l'étage d'absorption (90) pour produire la deuxième portion de la solution ammoniaquée enrichie en CO₂,
- de troisièmes moyens de mise en contact (92) pour mettre en contact, dans le troisième étage d'absorption (90), le flux de gaz de combustion nettoyé avec la deuxième portion de la solution ammoniaquée enrichie en CO₂ pour former un nouveau flux de gaz de combustion nettoyé,
- une sortie (52) pour le flux de gaz de combustion nettoyé envoyé depuis le deuxième étage d'absorption (56),
- un appareil (66) pour collecter le mélange de solution ammoniaquée pauvre en CO₂ et des première et deuxième portions de la solution ammoniaquée enrichie en CO₂ recirculée après qu'il est passé à travers le premier étage d'absorption (54) pour former une solution ammoniaquée enrichie en CO₂ collectée,
- un conduit de solution enrichie en CO₂ (20) pour faire passer une première portion de solution ammoniaquée enrichie en CO₂ recirculée pour régénération pour élimination du CO₂ de la première portion de la solution ammoniaquée enrichie en CO₂ collectée pour former la solution ammoniaquée pauvre en CO₂,
- un conduit de solution ammoniaquée pauvre en CO₂ (34) pour faire passer la solution ammoniaquée pauvre en CO₂ de la régénération au premier étage d'absorption (54) par le premier distributeur de liquide (60),
- un premier conduit de recirculation (74) pour faire passer une deuxième portion de la solution ammoniaquée enrichie en CO₂ collectée jusqu'au deuxième étage d'absorption (56) par le deuxième distributeur de liquide (64) pour former la première portion de la solution ammoniaquée enrichie en CO₂ recirculée, et
- un deuxième conduit de recirculation (96) pour faire passer une troisième portion de la solution ammoniaquée enrichie en CO₂ collectée jusqu'au deuxième étage d'absorption (90) par le troisième distributeur de liquide (94) pour former la deuxième portion de la solution ammoniaquée enrichie en CO₂ recirculée,
- un premier échangeur de chaleur (82) disposé sur le conduit de solution ammoniaquée pauvre en CO₂ (34) pour refroidir la solution ammoniaquée pauvre en CO₂ à une température dans la gamme de 20 à 40°C avant qu'elle soit envoyée au premier étage d'absorption (54),
- un deuxième échangeur de chaleur (78) disposé sur le conduit de recirculation (74), conçu pour refroidir la solution ammoniaquée enrichie en CO₂ recirculée à une température dans la gamme entre 20 et 25°C avant qu'elle soit envoyée au deuxième étage d'absorption (56), et
- un troisième échangeur de chaleur (104) disposé sur le conduit de recirculation (96), conçu pour refroidir la solution ammoniaquée enrichie en CO₂ recirculée à une température dans la gamme entre 0 et 10°C avant qu'elle soit envoyée au troisième étage d'absorption (94).

13. Système selon la revendication 12, dans lequel l'absorbeur comprend une unique tour (48) hébergeant les premiers, deuxièmes et troisièmes moyens de mise en contact (58, 60, 62, 64, 92, 94), les deuxièmes moyens de mise en contact (62, 64) étant situés verticalement au-dessus des premiers moyens de mise en contact (58, 60) à l'intérieur de la tour (48), et les troisièmes moyens de mise en contact (92, 94) étant situés verticalement au-dessus des deuxièmes moyens de mise en contact.
